# EUROPÄISCHE PATENTSCHRIFT

(11) **EP 2 994 355 B1**
(45) Veröffentlichungstag und Bekanntmachung des Hinweises auf die Patenterteilung: **11.07.2018**
(21) Anmeldenummer: 14721858.0
(22) Anmeldetag: 06.05.2014
(51) Int. Cl.: B60T 8/17

(54) **VERFAHREN ZUR ABBREMSUNG EINER ZUGFAHRZEUG-ANHÄNGERKOMBINATION MIT REDUZIERTER ANHÄNGERBREMSKRAFT ABHÄNGIG VOM ANSPRECHEN DES ZUGFAHRZEUG-ABS**
METHOD FOR BRAKING A TRACTION VEHICLE-TRAILER COMBINATION WITH REDUCED TRAILER BRAKING FORCE AS A FUNCTION OF THE RESPONSE OF THE ABS OF THE TRACTION VEHICLE
PROCÉDÉ DE FREINAGE D'UN ENSEMBLE VÉHICULE TRACTEUR-REMORQUE AVEC UNE FORCE DE FREINAGE DE REMORQUE RÉDUITE EN FONCTION DE LA RÉACTION DU SYSTÈME ABS DU VÉHICULE TRACTEUR

(30) Priorität: 08.05.2013 DE 102013007881
(43) Veröffentlichungstag der Anmeldung: 16.03.2016
(73) Patentinhaber: KNORR-BREMSE Systeme für Nutzfahrzeuge GmbH, 80809 München (DE)
(72) Erfinder: HUMMEL, Stefan, 70191 Stuttgart (DE); JUNDT, Oliver, 74394 Hessigheim (DE)
(86) Internationale Anmeldenummer: PCT/EP2014/059165
(87) Internationale Veröffentlichungsnummer: WO 2014/180810

(56) Entgegenhaltungen:
- EP-A1- 0 919 445
- EP-A1- 1 433 681
- WO-A1-03/022650
- DE-A1- 4 243 245
- DE-A1-102011 117 882
- US-A- 5 005 130
- US-A- 5 403 073

## Beschreibung

Die Erfindung betrifft ein Verfahren zur Abbremsung einer Zugfahrzeug-Anhängerkombination, bei welchem für eine Bremsanlage des Zugfahrzeugs eine Bremsschlupfregelung und für eine Bremsanlage des Anhängers keine Bremsschlupfregelung oder eine Bremsschlupfregelung für die vorhandenen Achsen, aber mit einer Bremsschlupfermittlung an weniger als den vorhandenen Achsen vorgesehen wird, gemäß dem Oberbegriff von Anspruch 1.

Weiterhin betrifft die Erfindung eine Bremsvorrichtung einer Zugfahrzeug-Anhängerkombination, wobei eine Bremsanlage für das Zugfahrzeug mit einer Bremsschlupfregelung ausgerüstet ist und eine Bremsanlage für den Anhänger keine Bremsschlupfregelung oder eine Bremsschlupfregelung für die vorhandenen Achsen, aber mit einer Bremsschlupfermittlung an weniger als den vorhandenen Achsen aufweist, gemäß dem Oberbegriff von Anspruch 8.

Im Folgenden soll unter "Anhänger" jegliche Art von Anhänger wie beispielsweise Deichselanhänger oder auch Sattelauflieger oder bei mehreren Anhängern auch Kombinationen gleicher oder unterschiedlicher Typen von Anhängern verstanden werden.

Üblicherweise wird bei einer Betätigung der Reibungsbremsanlage des Zugfahrzeugs die Reibungsbremsanlage des Anhängers mitbetätigt bzw. aktiviert oder zugespannt. Bei elektro-pneumatischen Bremsanlagen oder elektronisch geregelten Bremssystemen (EBS) im Zugfahrzeug wird dabei eine Bremsanforderung beispielsweise vom Fahrer oder von einem Fahrerassistenzsystem (ESP, ACC) als elektrisches und parallel auch als pneumatisches Bremsanforderungssignal erzeugt, wobei bei Anhängerbremsanlagen ohne Bremsschlupfregelung (ABS) zumindest das pneumatische Bremsanforderungssignal in die Reibungsbremsanlage des Anhängers eingesteuert wird, um in der Reibungsbremsanlage des Anhängers abhängig von der Bremsanforderung einen Bremsdruck zu erzeugen. Hierzu werden das elektrische und auch das pneumatische Bremsanforderungssignal in ein zugfahrzeugseitiges Anhängerbremsmodul des elektronisch geregelten Bremssystemen (EBS) eingesteuert, welches dann ein pneumatisches Bremssignal in einen Kupplungskopf "Bremse" für den Anhänger aussteuert. Das elektronisch geregelte Bremssystem (EBS) beinhaltet üblicherweise ABS-Routinen und führt sie im Rahmen einer bremsschlupfgeregelten Bremsung durch. Dabei werden das Zugfahrzeug und der Anhänger auch im Falle einer bremsschlupfgeregelten Bremsung mehr oder weniger gleich stark verzögert.

Die Bremsabstimmung zwischen Zugfahrzeug und Anhänger ist in der Norm ECE R 13 geregelt. Diese enthält sogenannte Kompatibilitätsbänder, welche ein Verhältnis zwischen der Abbremsung "z" und der Bremskraft des Anhängers bzw. dem Druck am Kupplungskopf "Bremse" des Zugfahrzeugs bei pneumatischen Bremsanlagen festlegen.

Nicht zuletzt sind für elektrische, elektro-pneumatische und elektro-hydraulische Bremssysteme Fahrerassistenzsysteme beispielsweise in Form von Fahrdynamikregelsystemen wie ESP (Elektronisches Stabilitäts-Programm) oder RSP (Roll Stability Program) bekannt, bei denen die Fahrzeugbewegung mittels einer Sensorik (Beschleunigungssensoren, Gierratensensoren) überwacht und die Zugfahrzeug-Anhänger-Kombinationen gegebenenfalls automatisch eingebremst wird. Weiterhin können solche Fahrerassistenzsysteme beispielsweise auch ein ACC-System (Adaptive Cruise Control) beinhalten, bei welchem der Abstand zu einem vorausfahrenden oder einscherenden Fahrzeug automatisch auf einen Sollabstand eingeregelt wird. Solchen Fahrerassistenzsystemen ist gemein, dass sie die Bremsanlage des Zugfahrzeugs und auch des Anhängers automatisch oder auch nur die Bremsen einzelner Räder des Zugfahrzeugs und des Anhängers aktivieren, wenn bestimmte Kriterien erfüllt sind, beispielsweise ein Unterschreiten des Sollabstands bei einem ACC-System oder eine Detektion eines instabilen Fahrzustands bei ESP.

Bei Bremsvorrichtungen von Zugfahrzeug-Anhängerkombinationen, bei denen die Bremsanlage für das Zugfahrzeug mit einer Bremsschlupfregelung ausgerüstet ist, nicht aber die Bremsanlage des Anhängers, ergibt sich das Problem, dass es bei einem Bremsvorgang, vor allem in Kurven, beim Anhänger zu einem Verlust an Seitenführung kommen kann, was wiederum zu einem Ausschwingen des Anhängers gegenüber dem Zugfahrzeug führt. Ein solches Ausschwingen des Anhängers kann sowohl bei einem automatischen Bremseingriff durch ein Fahrerassistenzsystem als auch bei einer durch den Fahrer selbst ausgelösten Bremsung auftreten.

Dieses Problem tritt aber auch bei Anhängern auf, deren Bremsanlage zwar eine Bremsschlupfregelung für die vorhandenen Achsen aufweist, bei der aber die Bremsschlupfermittlung durch Raddrehzahlsensoren an weniger als der vorhandenen Achsen, beispielsweise an nur an den Rädern einer Achse erfolgt. Mit anderen Worten sind Raddrehzahlsensoren an nur Rädern einer oder einigen der Achsen vorhanden, um den Radbremsschlupf an der einen Achse oder an den einigen Achsen der vorhandenen Achsen zu bestimmen. Eine solche Bremsschlupfregelung ist eher ungenau, insbesondere, wenn beispielsweise die einzige Achse des Anhängers, an welcher die Radbremsschlupfermittlung durchgeführt wird, die am höchsten belastete Achse ist, und folglich die anderen, weniger belasteten Achsen durch die nach dem erfassten Radschlupf an der einen Achse durchgeführten Bremsschlupfregelung dann bremsblockieren. In diesem Fall kann an den Rädern der Achsen des Anhängers ebenfalls nicht genügend Seitenführungskraft aufgebaut werden, um ein Ausschwingen des Anhängers zu vermeiden.

Um diesem Problem zu begegnen, wird in der EP 0 433 858 A2 vorgeschlagen, ein Ausschwingen eines Sattelaufliegers gegenüber dem Zugfahrzeug mittels eines am Drehgelenk zwischen dem Sattelauflieger und dem Zugfahrzeug angeordneten Drehwinkelsensors zu detektieren und bei einem Überschreiten eines zulässigen Drehwinkels die Anhängerbremsen zu lösen, um die Seitenführungskräfte der.Räder des Anhängers zu erhöhen. Ein solches Vorgehen bedingt jedoch eine zusätzliche Hardware und ist daher relativ aufwändig.

US 5403073B offenbart ein Verfahren zum Abbremsen einer Zugfahrzeug-Anhängerkombination, bei welchem die Koppelkräfte zwischen dem Zugfahrzeug und dem Anhänger gemessen werden und die Bremskräfte abhängig von den Koppelkräften angepasst werden. Hierfür ist jedoch eine zusätzliche Messeinrichtung erforderlich.

Ein gattungsgemäßes Verfahren bzw. eine gattungsgemäße Vorrichtung wird in DE 10 2011 117 882 A1 offenbart. Dort werden die Ist-Winkelgeschwindigkeiten in Bezug zu Soll-Winkelgeschwindigkeiten zwischen den Längsachsen des Zugfahrzeugs und des Traktors gesetzt und bei Vorliegen einer unzulässigen Abweichung und zusätzlich einem Ansprechen des Zugfahrzeug-ABS- der zugfahrzeugseitige Anhängerbremsdruck reduziert. Hierzu ist eine zusätzliche Steuerventilanordnung erforderlich.

Der Erfindung liegt demgegenüber die Aufgabe zugrunde, ein Verfahren und eine Bremsvorrichtung der eingangs erwähnten Art derart fortzubilden, dass mit möglichst geringem Aufwand ein unerwünschtes Ausschwingen des Anhängers vermieden werden kann.

Diese Aufgabe wird erfindungsgemäß durch die Merkmale der Ansprüche 1 und 8 gelöst.

### Offenbarung der Erfindung

Das erfindungsgemäße Verfahren basiert darauf, dass ein drohendes, bevorstehendes oder vorliegendes Ausschwingen des Anhängers gegenüber dem Zugfahrzeug durch ein Ansprechen der Bremsschlupfregelung des Zugfahrzeugs festgestellt wird.

Bei der erfindungsgemäßen Bremsvorrichtung wirkt die Steuer- und Auswerteeinrichtung mit der Bremsschlupfregelung der Bremsanlage des Zugfahrzeugs derart zusammen, dass sie ein drohendes, bevorstehendes oder vorliegendes Ausschwingen des Anhängers gegenüber dem Zugfahrzeug durch ein Ansprechen der Bremsschlupfregelung der Bremsanlage des Zugfahrzeugs feststellt.

Unter einem "Ansprechen der Bremsschlupfregelung" soll eine Aktivierung der Bremsschlupfregelung oder des ABS dahingehend verstanden werden, dass der Ist-Bremsschlupf am Zugfahrzeug von einem vorgegebenen oder zulässigen Soll-Bremsschlupf abweicht und deshalb auf den Soll-Bremsschlupf eingeregelt werden muss. Dieses Ansprechen der Bremsschlupfregelung bei der Bremsanlage des Zugfahrzeugs kann nur ein einziges Rad, die Räder einer einzigen Achse oder auch die Räder mehrerer Achsen oder einzelne Räder an mehreren Achsen des Zugfahrzeugs betreffen. Das Ansprechen der Bremsschlupfregelung des Zugfahrzeugs deutet auf einen niedrigen Reibwert der Fahrbahnoberfläche zumindest in dem Bereich an, in dem die Bremsschlupfregelung des betreffenden Rads oder der Räder der betreffenden Achse anspricht oder aktiviert wird. Ein solch niedriger Reibwert der Fahrbahnoberfläche begünstigt bekanntermaßen das Ausschwingen des Anhängers. Deshalb eignet sich das Ansprechen des Zugfahrzeug-ABS als Indiz oder Kriterium für eine vorliegende Ausschwinggefahr des Anhängers.

Da die Information über das Ansprechen des Zugfahrzeug-ABS ohnehin in dem betreffenden Steuergerät im Zugfahrzeug vorliegt (z.B. im elektronischen Bremssteuergerät bei einem EBS im Zugfahrzeug) und die Steuerung der Anhängerbremsen in der Regel vom Zugfahrzeug aus erfolgt, ist zum einen keine zusätzliche Hardware zur Umsetzung der Erfindung erforderlich. Zum andern beschränkt sich der Austausch von Daten auf das Zugfahrzeug bzw. findet lediglich innerhalb einer einzigen Steuer- und Auswerteeinrichtung (z.B. elektronisches Bremssteuergerät bei einem EBS im Zugfahrzeug) statt.

Erfindungsgemäß erfolgt die Absenkung der Bremskraft des Anhängers bzw. der Abbremsung des Anhängers durch ein Absenken einer zulässigen Schlupfgrenze der Bremsschlupfregelung des Zugfahrzeugs. Wenn daher beispielsweise die zulässige Schlupfgrenze der Bremsschlupfregelung von üblicherweise 12% bis 14% auf 7% herabgesetzt wird, so wird gegenüber der bei einer üblichen höheren Schlupfgrenze erzeugten Bremskraft oder Abbremsung eine niedrigere Bremskraft bzw. Abbremsung für Zugfahrzeug und Anhänger erzeugt.

Durch die in den Unteransprüchen aufgeführten Maßnahmen sind vorteilhafte Weiterbildungen und Verbesserungen der in Anspruch 1 angegebenen Erfindung möglich.

Besonders bevorzugt erfolgt die Absenkung der Bremskraft des Anhängers bzw. der Abbremsung des Anhängers relativ zu einer Referenzbremskraft oder Referenzabbremsung, welche die Bremsanlage des Anhängers erzeugt oder erzeugen würde, wenn sie durch die Bremsanlage des Zugfahrzeugs bei einem Ansprechen von deren Bremsschlupfregelung gesteuert wird.

Normalerweise wird einem Bremsanforderungssignal, gleich ob es vom Fahrer oder von einem Fahrerassistenzsystem erzeugt wird, eine bestimmte Soll-Verzögerung a (z.B. 0,7 m/s²) zugeordnet, mit der die Zugfahrzeug-Anhängerkombination dann abgebremst werden soll. Aus dieser Soll-Verzögerung ergibt sich dann für das Zugfahrzeug abhängig von der Beladung eine bestimmte Bremskraft bzw. Abbremsung z (Abbremsung z = Bremskraft/Normalkraft) bzw. ein bestimmter Bremsdruck bei fluidbetätigten Bremsanlagen.

Wie eingangs bereits beschrieben, wird die Bremsabstimmung zwischen Zugfahrzeug und Anhänger in der Norm ECE R 13 geregelt. Denn die Abbremsung z des Zugfahrzeugs und die Abbremsung z des Anhängers sollen möglichst gleich groß sein. Zu diesem Zweck sind Kompatibilitätsbänder vorgesehen, welche das Verhältnis zwischen der jeweils gewünschten Abbremsung z des Zugfahrzeugs bzw. des Anhängers und der daraus resultierenden Bremskraft des Anhängers bzw. und dem Druck am Kupplungskopf "Bremse" des Zugfahrzeugs bei fluidbetätigten Bremsanlagen festlegen.

Diese sich aus dem Kompatibilitätsband ergebende Bremskraft für den Anhänger bzw. der sich hieraus ergebende Bremsdruck für die Bremsanlage des Anhängers kann dann optional noch durch eine Koppelkraftregelung modifiziert werden.

Wenn dann, wie hier zusätzlich noch das ABS bzw. die Bremsschlupfregelung im Zugfahrzeug anspricht, was hier ja das Auslösekriterium für die Absenkung oder Reduktion der Bremskraft oder der Abbremsung des Anhängers darstellt, so wird die Bremskraft für das Zugfahrzeug gegenüber einer Bremsung ohne ABS reduziert.

Zusammenfassend bildet daher die in ihrer absoluten Größe vom Bremsanforderungssignal oder von der vorgegebenen Soll-Verzögerung der Zugfahrzeug-Anhängerkombination, von der ansprechenden Bremsschlupfregelung (Reibwert der Fahrbahnoberfläche) des Zugfahrzeugs, vom Kompatibilitätsband Zugfahrzeug-Anhänger und eventuell noch von einer vorhandenen Koppelkraftregelung abhängige Bremskraft oder Abbremsung des Anhängers dann die Referenzbremskraft oder die Referenzabbremsung, gegenüber welcher die Bremskraft oder die Abbremsung des Anhängers reduziert wird.

Gemäß einer Weiterbildung erfolgt das Absenken der Bremskraft des Anhängers gegenüber der Referenzbremskraft abhängig von der Beladung des Anhängers, einem Verhältnis zwischen der Beladung des Anhängers zur Beladung des Zugfahrzeugs und/oder abhängig von einem Verhältnis der Aufstandskräfte der Räder des Zugfahrzeugs und des Anhängers. Je geringer die Beladung des Anhängers beispielsweise ist, umso mehr wird die Bremskraft des Anhängers abgesenkt, um ein Blockieren der Anhängerbremsen und eine damit verbundene mangelnde Seitenführung zu vermeiden. Umgekehrt wird, je höher die Beladung des Anhängers ist, eine umso geringere Absenkung der Anhängerbremskraft eingestellt. Die Abhängigkeit der Absenkung oder Reduzierung der Anhängerbremskraft gegenüber der Referenzbremskraft von den genannten Faktoren kann beispielsweise in einem Kennfeld gespeichert sein. Die Steuer- und Auswerteeinrichtung wirkt dann mit die Beladung des Zugfahrzeugs und/oder die Beladung des Anhängers direkt oder indirekt ermittelnden Sensoren zusammen. Mithin kann die Beladung auch mit Hilfe des Differenzschlupfes an verschiedenen Achsen geschätzt werden, so dass die Sensoren in diesem Fall Raddrehzahlsensoren sind und keine Lastsensoren sein müssen.

Gemäß einer Weiterbildung dieser Ausführungsform erfolgt das Absenken der Bremskraft des Anhängers durch eine automatische lastabhängigen Bremskraftregelung (ALB) des Anhängers, falls der Anhänger mit einer solchen ALB ausgestattet ist.

Gemäß einer zu bevorzugenden Maßnahme erfolgt das Absenken der Bremskraft des Anhängers durch Modulation der Bremskraft, insbesondere durch Erzeugen eines gepulsten Bremsdrucks bei fluidbetätigten Bremsanlagen. Die Steuer- und Auswerteeinrichtung ist dann entsprechend ausgebildet, um in den Bremsaktuatoren des Anhängers einen gepulste Bremsdruck zu erzeugen.

Besonders bevorzugt wird der Bremsvorgang der Zugfahrzeug-Anhängerkombination automatisch ausgelöst, insbesondere durch ein Fahrerassistenzsystem wie ESP (Elektronisches Stabilitätsprogramm) oder ACC (Adaptive Cruise Control).

Alternativ kann der Bremsvorgang der Zugfahrzeug-Anhängerkombination aber auch mittels einer Betätigung eines Bremsbetätigungsorgans (z.B. Bremspedal) durch den Fahrer ausgelöst werden.

Besonders bevorzugt ist die Bremsanlage des Zugfahrzeugs ein elektronisch geregeltes Bremssystem (EBS) und die Steuer- und Auswerteeinrichtung steuert ein zugfahrzeugseitiges Anhängersteuermoduls des elektronisch geregelten Bremssystem (EBS) an, um das Absenken der Bremskraft des Anhängers zu realisieren. Ein solches Anhängersteuermodul ist ohnehin Bestandteil eines elektronisch geregelten Bremssystems (EBS) im Zugfahrzeug, so dass für die Absenkung der Anhängerbremskraft keine weitere Hardware notwendig ist. Aus dem gleichen Grund ist die Steuer- und Auswerteeinrichtung bevorzugt in einem ohnehin vorhandenen zentralen Bremssteuergerät des elektronisch geregelten Bremssystems (EBS) des Zugfahrzeugs integriert.

Die Bremsvorrichtung, bei der die Erfindung zum Einsatz kommt, kann eine pneumatische, elektro-pneumatische, hydraulische, elektro-hydraulische oder elektrische Bremsvorrichtung sein. Dabei wird die die abzusenkende oder zu reduzierende Bremskraft des Anhängers jeweils bestimmende Größe (z.B. pneumatischer oder hydraulischer Steuerdruck oder Bremsdruck bzw. elektrische Steuersignale) entsprechend beeinflusst, wobei keine Proportionalität zwischen dieser Größe und der Anhängerbremskraft bestehen muss. Entscheidend ist vielmehr, dass diese Größe so beeinflusst oder verändert wird, dass eine Absenkung der Anhängerbremskraft realisiert wird. Dies kann beispielsweise auch durch eine Erhöhung des Werts einer solchen Größe durchgeführt werden, wenn beispielsweise eine indirekte Proportionalität gegeben ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

In der Zeichnung zeigt
- Fig.1: einen schematischen Schaltplan einer bevorzugten Ausführungsform einer elektro-pneumatischen Bremsanlage eines Zugfahrzeugs einer Zugfahrzeug-Anhängerkombination;
- Fig.2: einen schematischen Schaltplan einer bevorzugten Ausführungsform einer pneumatischen Bremsanlage eines 2-achsigen Sattelanhängers der Zugfahrzeug-Anhängerkombination

### Beschreibung des Ausführungsbeispiels

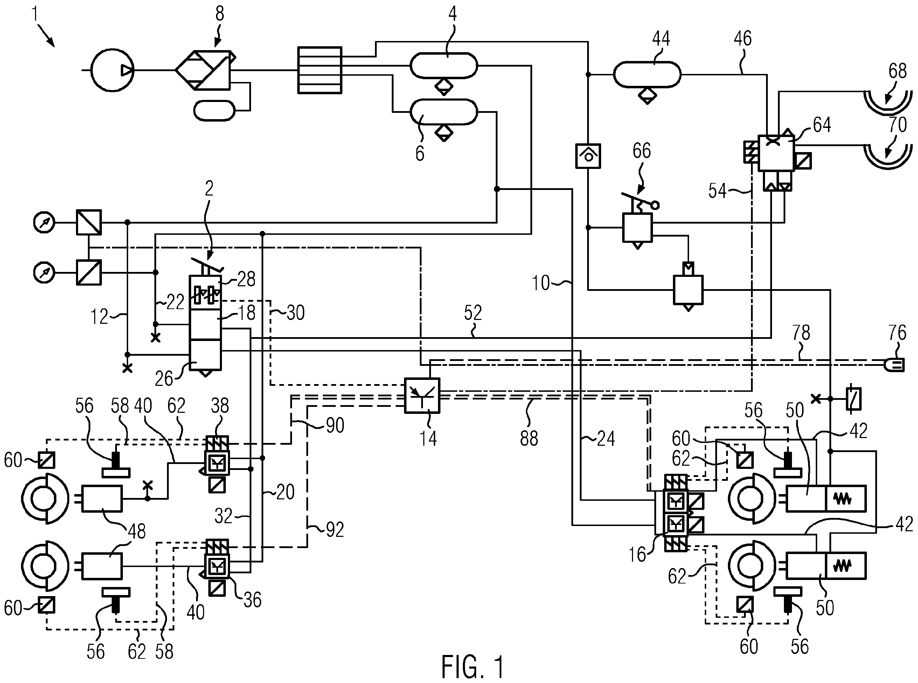

In Fig.1 ist schematisch eine bevorzugte Ausführungsform einer Betriebsbremsanlage 1 eines Zugsfahrzeugs einer Zugfahrzeug-Anhängerkombination gezeigt. Im vorliegenden Fall weist die Zugfahrzeug-Anhängerkombination lediglich einen 2-achsigen Sattelanhänger auf, es können jedoch auch ein Deichselanhänger oder mehrere Deichselanhänger am Zugfahrzeug angehängt sein.

Dabei wird die Betriebsbremsanlage 1 des Zugfahrzeugs beispielsweise durch eine elektro-pneumatische Reibungsbremsanlage in Form eines elektronisch geregelten Bremssystems (EBS; Electronic Brake System) gebildet.

Bei einem solchen elektronisch geregelten Bremssystems (EBS) sind achsweise oder radweise Druckregelmodule 16, 36, 38 vorhanden, mit integrierten Einlassventilen, Auslassventilen und Backup-Ventilen sowie mit Drucksensoren zur Erfassung des Ist-Bremsdrucks und mit einer übergeordneten Steuerelektronik zum Abgleich der Ist-Bremsdrücke mit den Soll-Bremsdrücken gemäß der jeweiligen Bremsanforderung. Das elektronisch geregelte Bremssystem (EBS) des Zugfahrzeugs beinhaltet weiterhin eine Bremsschlupfregelung (ABS), deren ABS-Steuerroutinen bevorzugt in ein zentrales Bremssteuergerät 14 integriert sind. Weiterhin sind hier beim Zugfahrzeug vorzugsweise eine Antriebsschlupfregelung (ASR) sowie ein elektronisches Stabilitätsprogramm (ESP) vorhanden, wobei die diesbezüglichen Steuerroutinen ebenfalls in dem zentralen Bremssteuergerät 14 implementiert sind.

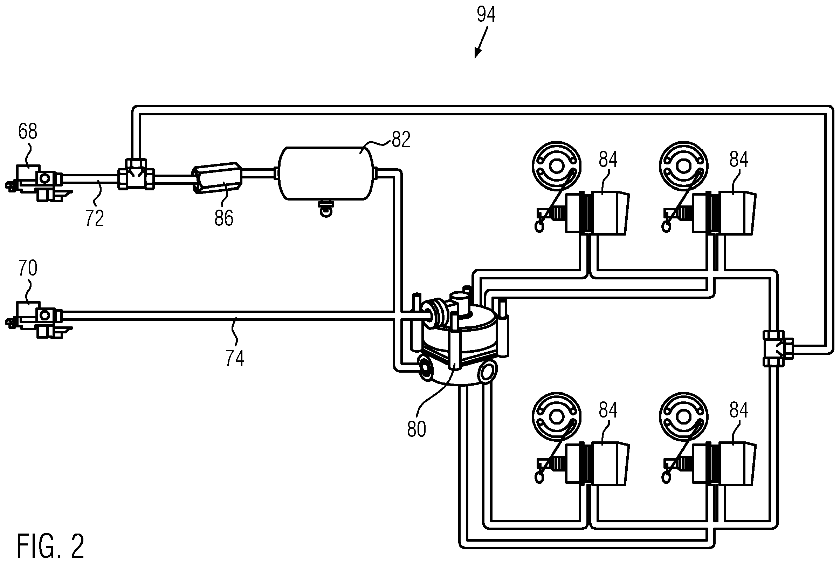

Die in Fig.2 gezeigte Betriebsbremsanlage 94 des Anhängers ist hingegen beispielsweise rein pneumatisch und verfügt vorzugsweise über keine Bremsschlupfregelung. Alternativ könnte die Betriebsbremsanlage 94 des Anhängers ebenfalls eine elektro-pneumatische Bremsanlage sein. Auf die Einzelheiten der Bremsanlage 94 des Anhängers wird später eingegangen.

Gemäß des in Fig.1 gezeigten Schaltschemas der elektro-pneumatischen Betriebsbremsanlage 1 des Zugfahrzeugs sind ein Fußbremswertgeber 2, ein Vorderachs-Vorratsdruckbehälter 4 zur Versorgung eines Vorderachs-Druckkreises oder Vorderachs-Druckkanals sowie ein Hinterachs-Vorratsdruckbehälter 6 zur Versorgung eines Hinterachs-Druckkreises oder Hinterachs-Druckkanals vorhanden. Die Luftbeschaffung, Luftaufbereitung und die Absicherung ist wie gesetzlich vorgeschrieben ausgeführt durch ein hier nicht näher beschriebenes Luftaufbereitungsmodul 8.

Der Hinterachs-Vorratsdruckbehälter 6 ist über pneumatische Versorgungsleitungen 10, 12 einerseits mit einem Vorratsanschluss eines 2-Kanal-Druckregelmoduls 16 für die Bremszylinder 50 der Hinterachse sowie mit einem Hinterachs-Fußbremsventil 26 des Fußbremswertgebers 2 verbunden. In analoger Weise ist der Vorderachs-Vorratsdruckbehälter 4 über pneumatische Versorgungsleitungen 20, 22 mit Vorratsanschlüssen von zwei jeweils einem Bremszylinder 48 eines Vorderrads zugeordneten 1-Kanal-Druckregelmodulen 36, 38 sowie mit einem Vorderachs-Fußbremsventil 18 des Fußbremsgebers 2 verbunden.

Der Fußbremswertgeber 2 umfasst daher zwei pneumatisch wirkende Fußbremsventile 18, 26, welche abhängig von einer durch den Fuß des Fahrers auf ein Bremspedal vorgegebenen Bremsanforderung jeweils einen pneumatischen Back-up-Druck oder Steuerdruck an den Ausgängen der Fußbremsventile 18, 26 erzeugen. Parallel hierzu sind in dem Fußbremswertgeber 2 in einem elektrischen Kanal 28 zusammengefasst ein elektrischer Vorderachskanal und ein elektrischer Hinterachskanal ausgebildet, welche abhängig von der Bremsanforderung jeweils ein elektrisches Bremsanforderungssignal in eine vorzugsweise als Datenbus 30 ausgebildete elektrische Verbindung zwischen dem elektrischen Kanal 28 des Fußbremswertgebers 2 und dem zentralen elektronischen Bremsteuergerät 14 einsteuert, welches die beiden beispielsweise aus Lastgründen verschiedenen Bremsanforderungssignale für die Vorderachse und die Hinterachse unterscheiden kann.

Weiterhin sind das Vorderachs-Fußbremsventil 18 und das Hinterachs-Fußbremsventil 26 des Fußbremswertgebers 2 jeweils über eine pneumatische Steuerleitung 24, 32 mit zugeordneten Back-up-Anschlüssen des 2-Kanal-Druckregelmoduls 16 bzw. der 1-Kanal-Druckregelmodule 36, 38 verbunden. Weiterhin führt jeweils eine pneumatische Bremsleitung 40, 42 von Arbeitsdruckanschlüssen des 2-Kanal-Druckregelmoduls 16 bzw. der beiden 1-Kanal-Druckregelmodule 36, 38 zu den radweisen Bremszylindern 48, 50 der Vorderachse bzw. der Hinterachse.

Drehzahlsensoren 56 melden die aktuelle Drehzahl der Räder des Zweiachsfahrzeugs über elektrische Signalleitungen 58 an das zentrale Bremssteuergerät 14. Ebenso sind bevorzugt Verschleißsensoren 60 je Radbremse vorgesehen, welche abhängig vom aktuellen Bremsenverschleiß Signale über elektrische Signalleitungen 62 in das zentrale Bremssteuergerät 14 melden.

Weiterhin ist ein Anhängersteuermodul 64 vorgesehen, welches einerseits mit einem zugfahrzeugseitigen Anhänger-Vorratsdruckbehälter 44 über eine Versorgungsleitung 46 mit Druckluft versorgt wird und andererseits vom pneumatischen Steuerdruck beispielsweise des Vorderachs-Fußbremsventils 18 des Fußbremswertgebers 2 über eine Steuerleitung 52 pneumatisch durch Back-up-Druck gesteuert wird. Weiterhin erhält das Anhängersteuermodul 64 auch ein elektrisches Signal vom zentralen Bremssteuergerät 14 über eine elektrische Steuerleitung 54. Schließlich wird das Anhängersteuermodul 64 noch von einer hier nicht interessierenden Feststellbremseinheit 66 angesteuert.

Das Anhängersteuermodul 64 enthält typischerweise ein Einlassmagnetventil und ein Auslassmagnetventil sowie ein Backup-Magnetventil zur Drucksteuerung eines ebenfalls integrierten und vom Anhänger-Druckluftvorrat 44 druckluftgespeisten Relaisventils, um abhängig von einem über die elektrische Steuerleitung 54 herangeführten Steuersignal über diese Magnetventile und das Relaisventil einen Steuerdruck für einen Kupplungskopf "Bremse" 70 auszusteuern. Das Relaisventil moduliert dabei aus dem an seinem Vorratsanschluss anstehenden Vorratsdruck des Anhänger-Vorratsdruckbehälters 44 abhängig von dem durch die Magnetventile gebildeten Steuerdruck den Steuerdruck für den Kupplungskopf "Bremse" 70. Mittels eines integrierten Drucksensors wird dieser Steuerdruck für den Kupplungskopf "Bremse" 70 gemessen und an das zentrale Bremssteuergerät 14 gemeldet. Fällt diese vorrangige elektrische Steuerung aus, so schaltet das integrierte Back-up-Ventil durch und das Relaisventil wird durch den in der Steuerleitung 52 geführten pneumatischen Steuerdruck des Vorderachs-Bremskreises gesteuert. Schließlich schleift das Anhängersteuermodul 64 die vom Anhänger-Druckluftvorrat 44 stammende Druckluft unter Vorratsdruck an einen Kupplungskopf "Vorrat" 68 des Zugfahrzeugs durch. Der Aufbau und die Funktionen eines solchen elektro-pneumatischen Anhängersteuermoduls 64 sind hinlänglich bekannt und brauchen deshalb hier nicht weiter erläutert zu werden.

Die Bremszuspanneinrichtungen der Hinterachse sind bevorzugt als bekannte Kombizylinder, d. h. als Kombination eines aktiven Betriebsbremszylinders 50 und eines passiven Federspeicherbremszylinders ausgebildet. "Aktiv" bedeutet in diesem Zusammenhang, dass die Betriebsbremszylinder 50 bei Belüftung zuspannen und bei Entlüftung lösen und "Passiv", dass die Federspeicherbremszylinder bei Entlüftung zuspannen und bei Belüftung lösen. An den Rädern der Vorderachse sind demgegenüber nur aktive Betriebsbremszylinder 48 vorgesehen.

Das als Baueinheit ausgeführte elektro-pneumatische 2-Kanal-Druckregelmodul 16 hat zwei getrennt regelbare Druckregelkanäle, wobei für jeden Druckregelkanal auf der Basis einer von dem Hinterachs-Druckluftvorrat 6 stammenden Vorratsluft abhängig von dem Bremsanforderungssignal des Fußbremswertgebers 2 ein geregelter, an den jeweiligen Arbeitsdruckanschlüssen anstehender Arbeitsdruck für die Bremszylinder 50 der Hinterachse erzeugt und mittels der integrierten Drucksensoren gemessen wird, um den gemessenen Ist-Bremsdruck an den Soll-Bremsdruck gemäß Bremsanforderung anzupassen bzw. einzuregeln. In analoger Weise wird in jedem 1-Kanal-Druckregelmodul 36, 38 der Vorderachse individuell für die beiden Bremszylinder 48 der Räder der Vorderachse der Bremsdruck geregelt.

Zur Ausbildung von pneumatisch kreisgetrennten Druckregelkanälen (beispielsweise hier: Vorderachs-Druckregelkanal bzw. Hinterachs-Druckregelkanal) ist jedem Druckregelkanal folglich ein eigener Druckluftvorrat 4, 6 zugeordnet, wobei die pneumatischen Strömungswege eines jeden Druckregelkanals ausgehend von dem zugeordneten Druckluftvorrat 4, 6 über die zugeordneten Druckregelmodule 16, 36, 38 bis zu den zugeordneten Bremszuspanneinrichtungen 48, 50 von dem pneumatischen Strömungsweg eines jeweils anderen Druckregelkanals pneumatisch getrennt ausgebildet sind.

Zur Ausbildung einer elektro-pneumatischen Bremsanlage mit vorrangig elektrisch betätigten Druckregelkanälen (Vorderachs-Druckregelkanal bzw. Hinterachs-Druckregelkanal) und einer nachrangigen pneumatischen Rückfallebene bei einem Ausfall der Elektrik ist jedem Druckregelmodul 16, 36, 38 besonders bevorzugt ein eigener Back-up-Kreis zugeordnet, mit eigenem Back-up-Ventil für die Einsteuerung eines von dem Vorratsdruck des dem jeweiligen Druckregelkreis der Hinterachse bzw. der Vorderachse zugeordneten Druckluftvorrat 4, 6 abgeleiteten und vom Fußbremswertgeber 2 gebildeten pneumatischen Back-up- oder Steuerdrucks, aus welchem bei einem Ausfall von elektrischen Komponenten der jeweilige Bremsdruck an den Arbeitsdruckanschlüssen der Druckregelmodule 16, 36, 38 gebildet wird.

Die Bremsanlage 1 des Zugfahrzeugs und die Bremsanlage 94 des Anhängers sind, wie bei solchen Bremsanlagen üblich, mittels jeweils eines Kupplungskopfes "Vorrat" 68 und jeweils mittels eines Kupplungskopfes "Bremse" 70 miteinander gekoppelt. Dabei wird der vom Zugfahrzeug herangeführte Vorratsdruck in einer in Fig.2 gezeigten anhängerseitigen Vorratsdruckleitung 72 und der vom Zugfahrzeug herangeführte Steuer- oder Bremsdruck in einer anhängerseitigen Steuerdruckleitung 74 im Anhänger geführt. Da das Anhängersteuermodul 64 kein eigenes elektronisches Steuergerät besitzt, müssen die elektrischen Bremssteuersignale vom zentralen Bremssteuergerät 14 über einen CAN-BUS "Anhänger" 78 und eine elektronische Anhängerschnittstelle 76 an den Anhänger übertragen werden, falls dieser eine elektro-pneumatische Bremsanlage aufweist, was hier aber nicht der Fall ist. Mangels elektro-pneumatischer Bremsanlage beim Anhänger findet daher keine Übertragung elektrischer Bremssteuersignale vom Zugfahrzeug auf den Anhänger statt. Das Anhängersteuermodul 64 wie auch das 2-Kanal-Druckregelmodul 16 und die beiden 1-Kanal-Druckregelmodule 36, 38 werden jeweils über eine elektrische Steuerleitung 54, 88, 90, 92 von dem zentralen Bremssteuergerät 14 angesteuert.

Bei der in Fig.2 gezeigten bevorzugt rein pneumatischen Betriebsbremsanlage 94 des Anhängers führt die Steuerdruckleitung 74 in einen Steuereingang eines bekannten Anhängersteuerventils 80 beispielsweise in Form eines Relaisventils, welches von einem anhängerseitigen Anhänger-Vorratsdruckbehälter 82 mit Druckluft versorgt wird, der über den Kupplungskopf "Vorrat" 68 und die Vorratsdruckleitung 72 vom Zugfahrzeug gespeist wird. An einem Arbeitsanschluss des Anhängersteuerventils 80 sind hier beispielsweise vier pneumatische und aktive Bremszylinder 84 angeschlossen. In der Vorratsdruckleitung 72 ist weiterhin ein Rückschlagventil 86 angeordnet.

Anstatt einer rein pneumatischen Bremsanlage könnte der Anhänger auch mit einer elektro-pneumatischen Bremsanlage mit ABS-Funktion versehen sein. In diesem Fall ist die elektrische Schnittsstelle 76 des Zugfahrzeugs über eine Datenverbindung, beispielsweise ein Kabel mit einer hierzu komplementären Schnittstelle im Anhänger verbunden, die zu einem ABS-Steuergerät im Anhänger führt, um Daten austauschen zu können. Damit wird eine Bremsschlupfregelung für alle Achsen des Anhängers durchgeführt. Wenn aber, wie bevorzugt die Radbremsschlupfermittlung durch Raddrehzahlsensoren an beispielsweise nur einer Achse des 2-achsigen Sattelaufliegers durchgeführt wird, dann wird der Bremsschlupf an der anderen, nicht mit Raddrehzahlsensoren versehenen Achse nach der einen Achse mit Raddrehzahlsensoren geregelt. Daraus können dann die eingangs beschriebenen Nachteile hinsichtlich des Bremsblockierens der anderen Achse ohne Raddrehzahlsensierung und die damit verbundene mangelnde Seitenführung der Räder dieser anderen Achse entstehen.

Vor diesem Hintergrund ist die Funktionsweise der Bremsvorrichtung wie folgt: Bei einem normalen Bremsvorgang betätigt der Fahrer das Bremspedal und damit den Fußbremswertgeber 2, wodurch in dem elektrischen Kanal 28 ein elektrisches Bremsanforderungssignal analog zur gewünschten Soll-Verzögerung erzeugt und in das zentrale Bremssteuergerät 14 eingesteuert wird, welches daraufhin über die die elektrischen Steuerleitungen 54, 88, 90, 92 das Anhängersteuermodul 64, das 2-Kanal-Druckregelmodul 16 sowie die beiden 1-Kanal-Druckregelmodule entsprechend dem Bremsanforderungssignal und eventuell abhängig von weiteren Parametern wie der jeweiligen Beladung steuert. Dabei werden die jeweils integrierten Einlassmagnetventile, Auslassmagnetventile und evtl. Back-up-Magnetventile, die meist als 2/2-Wege-Magnetventile ausgebildet sind entsprechend der Bremsanforderung geschaltet, damit sie die ebenfalls integrierten Relaisventile pneumatisch steuern, um einen gemäß der Bremsanforderung entsprechenden Soll-Bremsdruck bzw. Soll-Steuerdruck in die betreffenden Bremszylinder 48, 50 des Zugfahrzeugs und anhängerseitig in das Anhängersteuerventil 80 einzusteuern, welches aus dem Soll-Steuerdruck den Bremsdruck für die Bremszylinder 84 des Anhängers moduliert. Die in den Druckregelmoduln 16, 36 und 38 und in dem Anhängersteuermodul 64 integrierten Drucksensoren melden dann den Ist-Bremsdruck bzw. Ist-Steuerdruck an das zentrale Bremssteuergerät 14, welches daraufhin durch Ansteuerung der modulseitigen Magnetventile den Soll-Bremsdruck bzw. Soll-Steuerdruck einregelt.

Wenn das Bremsanforderungssignal für das zentrale Bremssteuergerät 14 anstatt vom Fußbremswertgeber 2 von einem Fahrassistenzsystem wie z.B. ESP oder ACC erzeugt wird, so laufen die gleichen Funktionen wie oben beschrieben ab.

Falls der Bremsschlupf eines Rades oder mehrerer Räder des Zugfahrzeugs eine vorgegebene Bremsschlupfgrenze von beispielsweise 12% bis 14% überschreitet, was über die Raddrehzahlsensoren 56 festgestellt werden kann, so spricht die Bremsschlupfregelung bzw. das ABS des Zugfahrzeugs an. Dabei wird über eine entsprechende Ansteuerung der Magnetventile in dem dem jeweils bremsschlupfenden Rad zugeordneten Druckregelmodul 36, 38 bzw. in dem den jeweils bremsschlupfenden Rädern zugeordneten Druckregelmodul 16 durch die in dem zentralen Bremssteuergerät 14 implementierten ABS-Routinen die Bremsdrücke für das Zugfahrzeug so eingestellt, dass die Bremsschlupf-Regeldifferenz ausgeregelt wird.

In dem zentralen Bremssteuergerät 14 sind Kompatibilitätsbänder gespeichert, welche das Verhältnis zwischen der jeweils gewünschten Abbremsung z der Zugfahrzeug-Anhängerkombination und der daraus resultierenden Bremskraft des Anhängers bzw. und dem Druck am Kupplungskopf "Bremse" des Zugfahrzeugs festlegen. Der sich aus dem Kompatibilitätsband ergebende Bremsdruck für die Bremsanlage des Anhängers kann dann optional noch durch eine Koppelkraftregelung modifiziert werden. Dann wird das Anhängersteuermodul 64 von dem zentralen Bremssteuergerät 14 angesteuert, um den pneumatischen Steuerdruck im Kupplungskopf "Bremse" für den Anhänger entsprechend dieser Vorgaben einzustellen. Somit würde der Bremsdruck im Anhänger abhängig von dem durch die Bremsschlupfregelung beeinflussten Bremsdruck im Zugfahrzeug gebildet.

Zusammenfassend bildet daher der in ihrer absoluten Größe vom Bremsanforderungssignal oder von der vorgegebenen Soll-Verzögerung der Zugfahrzeug-Anhängerkombination, von der ansprechenden Bremsschlupfregelung (Reibwert der Fahrbahnoberfläche) des Zugfahrzeugs, vom Kompatibilitätsband Zugfahrzeug-Anhänger und eventuell noch von einer vorhandenen Koppelkraftregelung abhängige Bremsdruck der Bremsanlage des Anhängers dann einen Referenzbremsdruck für die Bremsanlage des Anhängers. Anstatt eines Referenzbremsdrucks kann auch eine Referenzbremskraft des Anhängers oder eine Referenzabbremsung des Anhängers herangezogen werden, welche sich auf die gleichen oben beschriebenen Umstände bezieht.

Dann wird der Bremsdruck für die Bremsanlage des Anhängers relativ zu diesem, eigentlich für die Bremsanlage des Anhängers zu bildenden Referenzbremsdruck abgesenkt, wenn während des bremsschlupfgeregelten Bremsvorgangs ermittelt wird, dass ein Ausschwingen des Anhängers droht, bevorsteht oder vorliegt. Dabei wird ein drohendes, bevorstehendes oder vorliegendes Ausschwingen des Anhängers gegenüber dem Zugfahrzeug durch ein Ansprechen der Bremsschlupfregelung bzw. des ABS des Zugfahrzeugs festgestellt.

Unter einem "Ansprechen der Bremsschlupfregelung des Zugfahrzeugs" soll daher eine Aktivierung der Bremsschlupfregelung oder des ABS dahingehend verstanden werden, dass der Ist-Bremsschlupf an wenigstens einem Rad des Zugfahrzeugs von einem vorgegebenen oder zulässigen Soll-Bremsschlupf abweicht und deshalb auf den Soll-Bremsschlupf eingeregelt werden muss. Dieses Ansprechen der Bremsschlupfregelung bei der Bremsanlage des Zugfahrzeugs kann nur ein einziges Rad, die Räder einer einzigen Achse oder auch die Räder mehrerer Achsen oder einzelne Räder an mehreren Achsen des Zugfahrzeugs betreffen. Das Ansprechen der Bremsschlupfregelung des Zugfahrzeugs deutet auf einen niedrigen Reibwert der Fahrbahnoberfläche zumindest in dem Bereich an, in dem die Bremsschlupfregelung des betreffenden Rads oder der Räder der betreffenden Achse anspricht oder aktiviert wird. Ein solch niedriger Reibwert der Fahrbahnoberfläche begünstigt bekanntermaßen das Ausschwingen des Anhängers. Deshalb eignet sich das Ansprechen des Zugfahrzeug-ABS als Indiz oder Kriterium für eine vorliegende Ausschwinggefahr des Anhängers.

Die Absenkung des Bremsdrucks der Bremsanlage des Anhängers erfolgt dabei relativ zu dem oben erläuterten Referenzbremsdruck, aus dem dann die Referenzbremskraft in den Bremszylindern gebildet wird.

Da die Information über das Ansprechen des Zugfahrzeug-ABS ohnehin in dem zentralen Bremssteuergerät 14 im Zugfahrzeug im Rahmen der dort implementierten ABS-Routinen vorliegt und die Steuerung der Anhängerbremsen über das ebenfalls vom zentralen Bremssteuergerät 14 gesteuerte Anhängersteuermodul 64 erfolgt, wird die Absenkung des Bremsdrucks bzw. der Bremskraft im Anhänger durch eine entsprechende elektrische Ansteuerung des Anhängersteuermoduls 64 bzw. von dessen integrierten Magnetventilen durch eine hierfür speziell ausgestaltete Steuer- und Auswertelogik im zentralen Bremssteuergerät 14 bewerkstelligt.

Insbesondere kann das Absenken der Bremskraft bzw. des Bremsdrucks des Anhängers durch Modulation des Bremsdrucks realisiert werden. Das zentrale Bremssteuergerät steuert dann das Anhängersteuermodul 64, bzw. dessen integrierte Magnetventile beispielsweise getaktet an, um in den Bremszylindern 84 des Anhängers einen gepulsten Bremsdruck zu erzeugen.

Das Absenken des Bremsdrucks des Anhängers gegenüber dem Referenzbremsdruck kann zusätzlich abhängig von der Beladung des Anhängers, einem Verhältnis zwischen der Beladung des Anhängers zur Beladung des Zugfahrzeugs und/oder abhängig von einem Verhältnis der Aufstandskräfte der Räder des Zugfahrzeugs und des Anhängers erfolgen. Das zentrale Bremssteuergerät 14 wirkt dann mit die Beladung des Zugfahrzeugs und/oder die Beladung des Anhängers direkt oder indirekt ermittelnden Sensoren zusammen.

Besonders bevorzugt erfolgt die oben beschriebene Absenkung der Bremskraft bzw. des Bremsdrucks für den Anhänger im Rahmen eines bremsschlupfgeregelten Bremsvorgangs der Zugfahrzeug-Anhängerkombination, der automatisch ausgelöst wird, insbesondere durch ein Fahrerassistenzsystem wie ESP (Elektronisches Stabilitätsprogramm) oder ACC (Adaptive Cruise Control). Denkbar ist dabei jedes Fahrerassistenzsystem, welches eine automatische Bremsung auslösen kann. Alternativ kann der bremsschlupfgeregelte Bremsvorgang, bei dem die Absenkung durchgeführt wird, aber auch mittels einer Betätigung des Fußbremswertgebers 2 durch den Fahrer ausgelöst werden.

### Bezugszeichenliste

- 1: Betriebsbremsanlage Zugfahrzeug
- 2: Fußbremswertgeber
- 4: VA-Vorratsdruckbehälter
- 6: HA-Vorratsdruckbehälter
- 8: Luftaufbereitungsmodul
- 10: Versorgungsleitung
- 12: Versorgungsleitung
- 14: Bremssteuergerät
- 16: 2-Kanal-Druckregelmodul
- 18: VA-Fußbremsventil
- 20: Versorgungsleitung
- 22: Versorgungsleitung
- 24: Steuerleitung
- 26: HA-Fußbremsventil
- 28: elektrischer Kanal
- 30: Datenbus
- 32: Steuerleitung
- 36: 1-Kanal-Druckregelmodul
- 38: 1-Kanal-Druckregelmodul
- 40: Bremsleitung
- 42: Bremsleitung
- 44: zugfahrzeugseitiger Anhänger-Vorratsdruckbehälter
- 46: Versorgungsleitung
- 48: Bremszuspanneinrichtung VA
- 50: Bremszuspanneinrichtung HA
- 52: Steuerleitung
- 54: elektrische Steuerleitung
- 56: Drehzahlsensoren
- 58: elektrische Signalleitungen
- 60: Verschleißsensoren
- 62: elektrische Signalleitungen
- 64: Anhängersteuermodul
- 66: Feststell-Bremseinheit
- 68: Kupplungskopf "Vorrat"
- 70: Kupplungskopf "Bremse"
- 72: Vorratsdruckleitung
- 74: Steuerdruckleitung
- 76: Anhängerschnittstelle
- 78: Anhänger-Datenbus
- 80: Anhängersteuerventil
- 82: anhängerseitiger Anhänger-Vorratsdruckbehälter
- 84: Bremszylinder
- 86: Rückschlagventil
- 88: elektrische Steuerleitung
- 90: elektrische Steuerleitung
- 92: elektrische Steuerleitung
- 94: Betriebsbremsanlage Anhänger

## Patentansprüche

1. Verfahren zur Abbremsung einer Zugfahrzeug-Anhängerkombination mit einem Zugfahrzeug und wenigstens einem Anhänger, bei welchem für eine Bremsanlage (1) des Zugfahrzeugs eine Bremsschlupfregelung und für eine Bremsanlage (94) des wenigstens einen Anhängers keine Bremsschlupfregelung oder eine Bremsschlupfregelung für die vorhandenen Achsen, aber mit einer Bremsschlupfermittlung an weniger als den vorhandenen Achsen vorgesehen wird, wobei
a) die Bremsanlage (94) des Anhängers von der Bremsanlage (1) des Zugfahrzeugs gesteuert wird, und
b) bei einem Bremsvorgang ermittelt wird, ob ein Ausschwingen des Anhängers gegenüber dem Zugfahrzeug droht, bevorsteht oder vorliegt, und
c) die Bremskraft des Anhängers oder die Abbremsung des Anhängers abgesenkt wird, wenn in Schritt b) ermittelt wurde, dass ein Ausschwingen des Anhängers droht, bevorsteht oder vorliegt, wobei
d) ein drohendes, bevorstehendes oder vorliegendes Ausschwingen des Anhängers gegenüber dem Zugfahrzeug gemäß Schritt b) durch ein Ansprechen der Bremsschlupfregelung des Zugfahrzeugs festgestellt wird, **dadurch gekennzeichnet, dass**
e) die Absenkung der Bremskraft oder der Abbremsung des Anhängers durch Absenken einer zulässigen Schlupfgrenze der Bremsschlupfregelung des Zugfahrzeugs erfolgt.

2. Verfahren nach Anspruch 1, **dadurch gekennzeichnet, dass** die Absenkung der Bremskraft oder der Abbremsung des Anhängers relativ zu einer Referenzbremskraft oder zu einer Referenzabbremsung erfolgt, welche die Bremsanlage des Anhängers erzeugt, wenn sie durch die Bremsanlage des Zugfahrzeugs bei einem Ansprechen von deren Bremsschlupfregelung gesteuert wird.

3. Verfahren nach einem der vorhergehenden Ansprüche, **dadurch gekennzeichnet, dass** das Absenken der Bremskraft des Anhängers abhängig von der Beladung des Anhängers, einem Verhältnis zwischen der Beladung des Anhängers zur Beladung des Zugfahrzeugs und/oder abhängig von einem Verhältnis der Aufstandskräfte der Räder des Zugfahrzeugs und des Anhängers erfolgt.

4. Verfahren nach Anspruch 3, **dadurch gekennzeichnet, dass** das Absenken der Bremskraft des Anhängers durch eine automatische lastabhängige Bremskraftregelung (ALB) des Anhängers erfolgt.

5. Verfahren nach einem der vorhergehenden Ansprüche, **dadurch gekennzeichnet, dass** das Absenken der Bremskraft des Anhängers durch Modulieren dieser Bremskraft erfolgt.

6. Verfahren nach einem der vorhergehenden Ansprüche, **dadurch gekennzeichnet, dass** der Bremsvorgang der Zugfahrzeug-Anhängerkombination durch ein Fahrerassistenzsystem wie ESP oder ACC automatisch ausgelöst wird.

7. Verfahren nach einem der Ansprüche 1 bis 5, **dadurch gekennzeichnet, dass** der Bremsvorgang der Zugfahrzeug-Anhängerkombination mittels einer Betätigung eines Bremsbetätigungsorgans (2) durch den Fahrer ausgelöst wird.

8. Bremsvorrichtung einer Zugfahrzeug-Anhängerkombination, wobei eine Bremsanlage (1) für das Zugfahrzeug mit einer Bremsschlupfregelung ausgerüstet ist und eine Bremsanlage (94) für den Anhänger keine Bremsschlupfregelung oder eine Bremsschlupfregelung für die vorhandenen Achsen, aber mit einer Bremsschlupfermittlung an weniger als den vorhandenen Achsen aufweist, wobei
a) die Bremsanlage (94) des Anhängers von der Bremsanlage (1) des Zugfahrzeugs gesteuert ist, beinhaltend
b) eine Steuer- und Auswerteeinrichtung (14) zum Feststellen bei einem Bremsvorgangs, ob ein Ausschwingen des Anhängers gegenüber dem Zugfahrzeug droht, bevorsteht oder vorliegt, wobei
c) die Steuer- und Auswerteeinrichtung (14) ausgebildet ist, dass sie die Bremskraft oder die Abbremsung des Anhängers absenkt, wenn bei dem Bremsvorgang ermittelt wurde, dass ein Ausschwingen des Anhängers droht, bevorsteht oder vorliegt, wobei
d) die Steuer- und Auswerteeinrichtung (14) mit der Bremsschlupfregelung der Bremsanlage (1) des Zugfahrzeugs derart zusammen wirkt, dass sie ein drohendes, bevorstehendes oder vorliegendes Ausschwingen des Anhängers gegenüber dem Zugfahrzeug durch ein Ansprechen der Bremsschlupfregelung der Bremsanlage des Zugfahrzeugs feststellt, **dadurch gekennzeichnet,** das
e) die Steuer- und Auswerteeinrichtung (14) ausgebildet ist, dass die Absenkung der Bremskraft oder der Abbremsung des Anhängers durch Absenken einer zulässigen Schlupfgrenze der Bremsschlupfregelung des Zugfahrzeugs erfolgt.

9. Bremsvorrichtung nach Anspruch 8, **dadurch gekennzeichnet, dass** die Steuer- und Auswerteeinrichtung (14) ausgebildet ist, dass die Absenkung der Bremskraft oder der Abbremsung des Anhängers relativ zu einer Referenzbremskraft oder zu einer Referenzabbremsung erfolgt, welche die Bremsanlage des Anhängers erzeugt, wenn sie durch die Bremsanlage des Zugfahrzeugs bei einem Ansprechen der Bremsschlupfregelung gesteuert wird.

10. Bremsvorrichtung nach einem der Ansprüche 8 bis 9, **dadurch gekennzeichnet, dass** die Steuer- und Auswerteeinrichtung (14) mit die Beladung des Zugfahrzeugs und/oder die Beladung des Anhängers direkt oder indirekt ermittelnden Sensoren derart zusammen wirkt, dass das Absenken der Bremskraft oder der Abbremsung des Anhängers abhängig von der Beladung des Anhängers, einem Verhältnis zwischen der Beladung des Anhängers zur Beladung des Zugfahrzeugs und/oder abhängig von einem Verhältnis der Aufstandskräfte der Räder des Zugfahrzeugs und des Anhängers erfolgt.

11. Bremsvorrichtung nach Anspruch 10, **dadurch gekennzeichnet, dass** die Steuer- und Auswerteeinrichtung (14) eine automatische lastabhängige Bremskraftregeluhg (ALB) des Anhängers beinhaltet, durch welche das Absenken der Bremskraft des Anhängers erfolgt.

12. Bremsvorrichtung nach einem der Ansprüche 8 bis 11, **dadurch gekennzeichnet, dass** die Steuer- und Auswerteeinrichtung (14) derart ausgebildet ist, dass das Absenken der Bremskraft oder der Abbremsung des Anhängers durch Modulation der Bremskraft erfolgt.

13. Bremsvorrichtung nach einem der Ansprüche 8 bis 12, **dadurch gekennzeichnet, dass** sie mit einem Fahrerassistenzsystem wie ESP oder ACC zusammen wirkt, welches den Bremsvorgang der Zugfahrzeug-Anhängerkombination automatisch auslöst.

14. Bremsvorrichtung nach einem der Ansprüche 8 bis 12, **dadurch gekennzeichnet, dass** sie ein Bremsbetätigungsorgan (2) aufweist, durch dessen Betätigung der Bremsvorgang der Zugfahrzeug-Anhängerkombination ausgelöst wird.

15. Bremsvorrichtung nach einem der Ansprüche 8 bis 14, **dadurch gekennzeichnet, dass** sie eine pneumatische, elektro-pneumatische, hydraulische, elektro-hydraulische oder elektrische Bremsvorrichtung ist.

16. Bremsvorrichtung nach einem der Ansprüche 8 bis 15, **dadurch gekennzeichnet, dass** die Bremsanlage (1) des Zugfahrzeugs ein elektronisch geregeltes Bremssystem (EBS) ist und die Steuer- und Auswerteeinrichtung (14) ein zugfahrzeugseitiges Anhängersteuermodul (64) des elektronisch geregelten Bremssystems (EBS) ansteuert, um das Absenken der Bremskraft des Anhängers zu realisieren.

17. Bremsvorrichtung nach einem der Ansprüche 8 bis 16, **dadurch gekennzeichnet, dass** die Steuer- und Auswerteeinrichtung (14) in einem zentralen Bremssteuergerät der Bremsanlage (1) des Zugfahrzeugs integriert ist.

18. Zugfahrzeug-Anhängerkombination, **dadurch gekennzeichnet, dass** sie eine Bremsvorrichtung nach einem der Ansprüche 8 bis 17 aufweist.

## Claims

1. Method for braking a traction vehicle-trailer combination with a traction vehicle and at least one trailer, in which method a traction controller is provided for a brake system (1) of the traction vehicle, and for a brake system (94) of the at least one trailer, no traction controller is provided or a traction controller is provided for the axles which are present, but with a brake-slip-determining means on fewer axles than the number of axles which are present, wherein
a) the brake system (94) of the trailer is controlled by the brake system (1) of the traction vehicle, and
b) during a braking process it is determined whether there is a risk of the trailer swinging out with respect to the traction vehicle, or whether such swinging out is imminent or is occurring, and
c) the braking force of the trailer or the braking of the trailer is reduced if it has been determined in step b) that there is a risk of the trailer swinging out, or such swinging out is imminent or is occurring, wherein
d) a risk of the trailer swinging out, or imminent or occurring swinging out of the trailer, with respect to the traction vehicle, is detected according to step b) by means of a response of the traction controller of the traction vehicle,
**characterized in that**
e) the reduction of the braking force or of the braking of the trailer is carried out by reducing a permissible slip limit of the traction controller of the traction vehicle.

2. Method according to Claim 1, **characterized in that** the reduction of the braking force or of the braking of the trailer occurs relative to a reference braking force or to reference braking which is generated by the brake system of the trailer when said brake system is controlled by the brake system of the traction vehicle in the event of a response by the traction controller of said system.

3. Method according to either of the preceding claims, **characterized in that** the reduction of the braking force of the trailer is carried out as a function of the load of the trailer, a ratio between the load of the trailer and the load of the traction vehicle and/or as a function of a ratio of the contact forces of the wheels of the traction vehicle to those of the trailer.

4. Method according to Claim 3, **characterized in that** the reduction of the braking force of the trailer is carried out by an automatic load-dependent braking force controller (ALB) of the trailer.

5. Method according to one of the preceding claims, **characterized in that** the reduction of the braking force of the trailer is carried out by modulating this braking force.

6. Method according to one of the preceding claims, **characterized in that** the braking process of the traction vehicle-trailer combination is triggered automatically by means of a driver assistance system such as an ESP or ACC.

7. Method according to one of Claims 1 to 5, **characterized in that** the braking process of the traction vehicle-trailer combination is triggered by means of activation of a brake activation element (2) by the driver.

8. Brake device of a traction vehicle-trailer combination, wherein a brake system (1) for the traction vehicle is equipped with a traction controller, and a brake system (94) for the trailer does not have a traction controller or has a traction controller for the axles which are present, but with a brake-slip-determining means on fewer axles than the number of axles which are present, wherein
a) the brake system (94) of the trailer is controlled by the brake system (1) of the traction vehicle, containing
b) a control and evaluation device (14) for detecting during a braking process whether there is a risk of the trailer swinging out with respect to the traction vehicle, or whether such swinging out is imminent or occurring, wherein
c) the control and evaluation device (14) is embodied in such a way that it reduces the braking force or the braking of the trailer if it has been determined during the braking process that there is a risk of the trailer swinging out, or such swinging out is imminent or occurring, wherein
d) the control and evaluation device (14) interacts with the traction controller of the brake system (1) of the traction vehicle in such a way that it detects a risk of the trailer swinging out, or imminent or occurring swinging out of the trailer, with respect to the traction vehicle, by means of a response of the traction controller of the brake system of the traction vehicle,
**characterized in that**
e) the control and evaluation device (14) is embodied in such a way that the reduction of the braking force or of the braking of the trailer is carried out by reducing a permissible slip limit of the traction controller of the traction vehicle.

9. Brake device according to Claim 8, **characterized in that** the control and evaluation device (14) is embodied in such a way that the reduction of the braking force or of the braking of the trailer occurs relative to a reference braking force or to a reference braking which is generated by the brake system of the trailer when said brake system is controlled by the brake system of the traction vehicle in the event of a response by the traction controller.

10. Brake device according to either of Claims 8 and 9, **characterized in that** the control and evaluation device (14) interacts with sensors which directly or indirectly determine the load of the traction vehicle and/or the load of the trailer in such a way that the reduction of the braking force or of the braking of the trailer is carried out as a function of the load of the trailer, a ratio between the load of the trailer and the load of the traction vehicle and/or as a function of a ratio of the contact forces of the wheels of the traction vehicle to those of the trailer.

11. Brake device according to Claim 10, **characterized in that** the control and evaluation device (14) contains an automatic load-dependent braking force controller (ALB) of the trailer, by means of which braking force controller (ALB) the reduction of the braking force of the trailer is carried out.

12. Brake device according to one of Claims 8 to 11, **characterized in that** the control and evaluation device (14) is embodied in such a way that the reduction of the braking force or of the braking of the trailer is carried out by modulating the braking force.

13. Brake device according to one of Claims 8 to 12, **characterized in that** it interacts with a driver assistance system such as an ESP or ACC which automatically triggers the braking process of the traction vehicle-trailer combination.

14. Brake device according to one of Claims 8 to 12, **characterized in that** it has a brake activation element (2), the activation of which causes the braking process of the traction vehicle-trailer combination to be triggered.

15. Brake device according to one of Claims 8 to 14, **characterized in that** it is a pneumatic, electro-pneumatic, hydraulic, electro-hydraulic or electric brake device.

16. Brake device according to one of Claims 8 to 15, **characterized in that** the brake system (1) of the traction vehicle is an electronically controlled brake system (EBS), and the control and evaluation device (14) actuates a traction-vehicle-side trailer control module (64) of the electronically controlled brake system (EBS) in order to implement the reduction of the braking force of the trailer.

17. Brake device according to one of Claims 8 to 16, **characterized in that** the control and evaluation device (14) is integrated into a central brake control unit of the brake system (1) of the traction vehicle.

18. Traction vehicle-trailer combination **characterized in that** it has a brake device according to one of Claims 8 to 17.

## Revendications

1. Procédé de freinage d'un ensemble véhicule de traction-remorque, comprenant un véhicule de traction et au moins une remorque, dans lequel on prévoit, pour un système (1) de frein du véhicule de traction, une régulation du glissement de freinage et, pour un système (94) de frein de la au moins une remorque, on ne prévoit pas de régulation de glissement de freinage ou on prévoit une régulation de glissement de freinage pour les essieux présents, mais avec une détermination du glissement de freinage sur moins que les essieux présents, dans lequel
a) on commande le système (94) de freinage de la remorque par le système (1) de freinage du véhicule de traction et
b) on détermine, lors d'une opération de freinage, si un balancement de la remorque par rapport au véhicule de traction menace, est imminent ou est présent et
c) on diminue la force de freinage de la remorque ou le freinage de la remorque s'il a été déterminé au stade b) qu'un balancement de la remorque menace, est imminent ou est présent, dans lequel
d) on constate un balancement menaçant, imminent ou présent de la remorque par rapport au véhicule de traction suivant le stade b) par une réaction de la régulation du glissement de frein du véhicule de traction,
**caractérisé en ce que**
e) on effectue la diminution de la force de freinage ou du freinage de la remorque en diminuant une limite de glissement admissible de la régulation du glissement de frein du véhicule de traction.

2. Procédé suivant la revendication 1, **caractérisé en ce que** l'on effectue la diminution de la force de freinage ou du freinage de la remorque par rapport à une force de freinage de référence ou par rapport à un freinage de référence, que le système de frein de la remorque produit, si elle est commandée par le système de frein du véhicule de traction lorsqu'une réaction de sa régulation de glissement de frein se produit.

3. Procédé suivant l'une des revendications précédentes, **caractérisé en ce que** la diminution de la force de freinage de la remorque s'effectue en fonction de la charge de la remorque, d'un rapport entre la charge de la remorque à la charge du véhicule de traction et/ou en fonction d'un rapport des forces d'appui des roues du véhicule ferroviaire et de la remorque.

4. Procédé suivant la revendication 3, **caractérisé en ce que** la diminution de la force de freinage de la remorque s'effectue par une régulation (ALB) automatique, en fonction de la charge, de la remorque.

5. Procédé suivant l'une des revendications précédentes, **caractérisé en ce que** la diminution de la force de freinage de la remorque s'effectue par modulation de cette force de freinage.

6. Procédé suivant l'une des revendications précédentes, **caractérisé en ce que** l'on déclenche automatiquement l'opération de freinage de l'ensemble véhicule de traction-remorque par un système d'assistance à la conduite, comme ESP ou ACC.

7. Procédé suivant l'une des revendications 1 à 5, **caractérisé en ce que** l'opération de freinage de l'ensemble véhicule de traction-remorque est déclenchée par le conducteur au moyen d'un actionnement d'un organe (2) d'actionnement du frein.

8. Dispositif de freinage d'un ensemble véhicule de traction-remorque, dans lequel un système (1) de freinage du véhicule de traction est équipé d'une régulation de glissement de frein et un système (94) de freinage de la remorque n'a pas de régulation de glissement de frein ou a une régulation de glissement de frein pour les essieux présents, mais avec une détermination de glissement de frein sur moins que les essieux présents, dans lequel
a) le système (94) de freinage de la remorque est commandé par le système (1) de freinage du véhicule de traction, comportant
b) un dispositif (14) de commande et d'exploitation pour constater, lors d'une opération de freinage, si un balancement de la remorque, par rapport au véhicule de traction, menace, est imminent ou est présent, dans lequel
c) le dispositif (14) de commande et d'exploitation est constitué de manière à diminuer la force de freinage ou le freinage de la remorque s'il a été déterminé, lors de l'opération de freinage, qu'un balancement de la remorque menace, est imminent ou est présent, dans lequel
d) le dispositif (14) de commande et d'exploitation coopère avec la régulation de glissement de frein du système (1) de freinage du véhicule de traction, de manière à constater un balancement menaçant, imminent ou présent de la remorque par rapport au véhicule de traction, par une réaction de la régulation de glissement de frein du système de freinage du véhicule de traction,
**caractérisé en ce que**
e) le dispositif (14) de commande et d'exploitation est constitué de manière à ce que la diminution de la force de frein ou le freinage de la remorque s'effectue par diminution d'une limite de glissement admissible de la régulation de glissement de frein du véhicule de traction.

9. Dispositif de frein suivant la revendication 8, **caractérisé en ce que** le dispositif (14) de commande et d'exploitation est constitué de manière à ce que la diminution de la force du frein ou du freinage de la remorque s'effectue par rapport à une force de freinage de référence ou par rapport à un freinage de référence, que le système de frein de la remorque produit, si elle est commandée par le système de frein du véhicule de traction lorsqu'une réaction de la régulation de glissement de frein se produit.

10. Dispositif de frein suivant l'une des revendications 8 à 9, **caractérisé en ce que** le dispositif (14) de commande et d'exploitation coopère avec des capteurs déterminant directement ou indirectement le chargement du véhicule de traction et/ou le chargement de la remorque, de manière à ce que la diminution de la force de freinage ou le freinage de la remorque s'effectue en fonction de la charge de la remorque, d'un rapport entre la charge de la remorque et la charge du véhicule de traction et/ou en fonction d'un rapport des forces d'appui des roues du véhicule de traction et de la remorque.

11. Dispositif de frein suivant la revendication 10, **caractérisé en ce que** le dispositif (14) de commande et d'exploitation comporte une régulation (ALB) automatique de la force de frein, en fonction de la charge, de la remorque par laquelle la diminution de la force de frein de la remorque s'effectue.

12. Dispositif de frein suivant l'une des revendications 8 à 11, **caractérisé en ce que** le dispositif (14) de commande et d'exploitation est constitué de manière à ce que la diminution de la force de frein ou du freinage de la remorque s'effectue par modulation de la force de frein.

13. Dispositif de frein suivant l'une des revendications 8 à 12, **caractérisé en ce qu'**il coopère avec un système d'assistance à la conduite, comme ESP ou ACC, qui déclenche automatiquement l'opération de freinage de l'ensemble véhicule de traction-remorque.

14. Dispositif de frein suivant l'une des revendications 8 à 12, **caractérisé en ce qu'**il a un organe (2) d'actionnement du frein, par l'actionnement duquel l'opération de freinage de l'ensemble véhicule de traction-remorque est déclenchée.

15. Dispositif de frein suivant l'une des revendications 8 à 14, **caractérisé en ce que** c'est un dispositif de freinage pneumatique, électropneumatique, hydraulique, électro-hydraulique ou électrique.

16. Dispositif de frein suivant l'une des revendications 8 à 15, **caractérisé en ce que** le système (1) de frein du véhicule ferroviaire est un système de frein à régulation électronique (EBS) et le dispositif (14) de commande et d'exploitation commande un module (64) de commande de remorque, du côté du véhicule de traction, du système (EBS) de frein à régulation électronique pour réaliser la diminution de la force de freinage de la remorque.

17. Dispositif de frein suivant l'une des revendications 8 à 16, **caractérisé en ce que** le dispositif (14) de commande et d'exploitation est intégré dans un appareil de commande de frein central du système (1) de frein du véhicule de traction.

18. Ensemble véhicule de traction-remorque, **caractérisé en ce qu'**il a un dispositif de freinage suivant l'une des revendications 8 à 17.
